# EUROPÄISCHE PATENTSCHRIFT

(11) **EP 3 085 838 B1**
(45) Veröffentlichungstag und Bekanntmachung des Hinweises auf die Patenterteilung: **28.02.2018**
(21) Anmeldenummer: 16000909.8
(22) Anmeldetag: 22.04.2016
(51) Int. Cl.: E03C 1/04

(54) **SANITÄRARMATUR FÜR ZUMINDEST ZWEI FLUIDE**
SANITARY FITTING FOT AT LEAST TWO FLUIDS
ROBINETTERIE POUR AU MOINS DEUX FLUIDES

(30) Priorität: 22.04.2015 DE 102015005098
(43) Veröffentlichungstag der Anmeldung: 26.10.2016
(73) Patentinhaber: Grohe AG, 58675 Hemer (DE)
(72) Erfinder: Kostorz, Ole Benedikt, 58706 Menden (DE)

(56) Entgegenhaltungen:
- EP-A1- 1 557 501
- WO-A1-2007/004050
- GB-A- 2 354 059
- US-A1- 2007 176 023
- US-A1- 2007 235 091

## Beschreibung

Die vorliegende Erfindung betrifft eine Sanitärarmatur zur bedarfsgerechten Bereitstellung von zumindest zwei Fluiden. Solche Sanitärarmaturen werden regelmäßig im Zusammenhang mit Waschbecken, Spülbecken und/oder Badewannen im Sanitärbereich verwendet.

Bekannte Sanitärarmaturen dienen insbesondere dem bedarfsgerechten Zapfen eines Mischwassers mit einer gewünschten Mischwassertemperatur. Hierzu kann eine Sanitärarmatur ein Mischventil oder eine Thermostatkartusche zum Mischen eines Kaltwassers mit einer Kaltwassertemperatur und eines Warmwassers mit einer Warmwassertemperatur zu dem Mischwasser mit der Mischwassertemperatur aufweisen. Solche Mischventile oder Thermostatkartuschen sind insbesondere über einen Hebel und/oder anderweitige Stellglieder eines Gehäuses der Sanitärarmatur betätigbar. Das Mischwasser wird beim Zapfen über einen Schlauch durch das Gehäuse zu einer Austrittsöffnung eines Auslaufs der Sanitärarmatur geleitet.

Aus dem Stand der Technik sind zudem Sanitärarmaturen bekannt, bei denen gleichzeitig neben dem Mischwasser noch zumindest ein weiteres Fluid zu der Austrittsöffnung des Auslaufs leitbar ist. Bei diesem zweiten Fluid kann es sich beispielsweise um Wasser handeln, das einer Behandlung, beispielsweise einer Filterung und/oder Karbonisierung, unterzogen wurde. Das weitere Fluid wird bei diesen Sanitärarmaturen beim Zapfen über einen separaten zweiten Schlauch der Austrittsöffnung des Auslaufs zugeführt, sodass zumindest zwei getrennte Schläuche für die beiden Fluide erforderlich sind. Dies hat sich jedoch insbesondere bei Sanitärarmaturen, bei denen der Auslauf aus dem Gehäuse der Sanitärarmatur herausziehbar ist, als nachteilig erwiesen, weil beide Schläuche sich beim Herausziehen des Auslaufs aus dem Gehäuse oder bei der Montage der Schläuche in dem Auslauf gegenseitig blockieren oder behindern können.

Die Anmeldung US 2007/0235091 A1 stellt dabei den nächstkommenden Stand der Technik dar und offenbart eine Sanitärarmatur gemäß dem Oberbegriff des unabhängigen Anspruchs 1. Diese Sanitärarmatur weist einen Auslauf mit zwei Schläuchen auf, wobei der erste Schlauch im zweiten Schlauch angeordnet ist, so dass das zweite Fluid durch einen Ringraum zwischen den beiden Schläuchen geleitet wird. Beide Schläuche sind mit je einem Nippel verbunden, welcher wiederum am Gehäuse gelagert ist. Nachteilig hierbei ist, dass der innere Schlauch vom korrespondierenden Nippel rutschen kann und die Armatur dann aufwendig zerlegt werden muss, um die Verbindung wieder herzustellen.

Weitere Armaturen mit Ausläufen, die jeweils zwei Schläuche für zwei Fluide aufweisen sind aus WO 2007/004050 A1 und US 2007/0176023 A1 bekannt. Auch hier sind die Schläuche jeweils mit einem Nippel verbunden, der wiederum am Gehäuse gelagert ist.

Aufgabe der Erfindung ist daher, die mit Bezug auf den Stand der Technik geschilderten Probleme zumindest teilweise zu lösen und insbesondere eine Sanitärarmatur anzugeben, mit der zumindest zwei Fluide ohne eine Mehrzahl von separaten Schläuchen einer Austrittsöffnung eines Auslaufs getrennt zuführbar sind. Dabei ist es Aufgabe der Erfindung, die Verbindung der Schläuche mit den jeweiligen Nippeln derart zu verbessern, dass der innere Schlauch gegen Herabrutschen gesichert ist.

Diese Aufgabe wird gelöst mit einer Sanitärarmatur gemäß den Merkmalen des unabhängigen Patentanspruchs. Weitere vorteilhafte Ausgestaltungen der Sanitärarmatur sind in den abhängig formulierten Patentansprüchen angegeben. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Die erfindungsgemäße Sanitärarmatur weist ein Gehäuse mit einem Auslauf auf, wobei ein erstes Fluid über einen ersten Schlauch zu einer Austrittsöffnung des Auslaufs und ein zweites Fluid über einen zweiten Schlauch zu der Austrittsöffnung des Auslaufs leitbar sind und wobei der erste Schlauch zumindest teilweise in dem zweiten Schlauch angeordnet ist.

Die vorgeschlagene Sanitärarmatur wird insbesondere im Zusammenhang mit Spülbecken, Waschbecken und/oder Badewannen im Sanitärbereich verwendet. Solche Sanitärbereiche dienen insbesondere der Hygiene und der Gesundheit des Menschen. Mittels der Sanitärarmatur kann insbesondere ein erstes Fluid und ein zweites Fluid bedarfsgerecht gezapft werden. Hierzu weist die Sanitärarmatur ein Gehäuse mit einem Auslauf auf, wobei der Auslauf insbesondere drehbar an dem Gehäuse angeordnet und/oder aus dem Gehäuse herausziehbar ist. Das Gehäuse und/oder der Auslauf bestehen zumindest teilweise aus Metall, wie zum Beispiel Messing, und/oder Kunststoff. Weiterhin ist das Gehäuse an einem Träger, wie zum Beispiel dem Spülbecken, dem Waschbecken und/oder der Badewanne, befestigbar. Hierzu kann der Träger eine Öffnung aufweisen, in die das Gehäuse zumindest teilweise einsteckbar ist. Bei dem ersten Fluid handelt es sich insbesondere um Wasser beziehungsweise Mischwasser, das durch die Sanitärarmatur aus einem Kaltwasser mit einer Kaltwassertemperatur und einem Warmwasser mit einer Warmwassertemperatur zu dem Mischwasser mit einer gewünschten Mischwassertemperatur mischbar ist. Hierzu kann die Sanitärarmatur ein Mischventil oder eine Thermostatkartusche aufweisen, die über einen Hebel und/oder ein anderes Stellglied des Gehäuses durch einen Benutzer betätigbar ist. Das erste Fluid ist über einen ersten Schlauch zu einer Austrittsöffnung des Auslaufs leitbar. Bei der Austrittsöffnung kann es sich beispielsweise um einen Strahlregler handeln, durch den das erste Fluid aus der Sanitärarmatur austritt. Bei dem zweiten Fluid handelt es sich insbesondere um Wasser, das einer Behandlung unterzogen wurde. Die Behandlung kann beispielsweise eine Filterung und/oder eine Karbonisierung des Wassers umfassen. Das erste Fluid und das zweite Fluid werden in der Sanitärarmatur getrennt voneinander geführt, sodass eine Durchmischung des ersten Fluids und zweiten Fluids in der Sanitärarmatur im Wesentlichen verhindert ist. Hierzu ist das zweite Fluid über einen zweiten Schlauch zu der Austrittsöffnung des Auslaufs leitbar. Bei dem ersten Schlauch und/oder dem zweiten Schlauch handelt es sich insbesondere um einen Kunststoffschlauch, der flexibel ausgestaltet sein kann. Weiterhin ist der erste Schlauch zumindest teilweise in dem zweiten Schlauch angeordnet. Dies bedeutet mit anderen Worten, dass der erste Schlauch zumindest teilweise durch den zweiten Schlauch verläuft. Hierdurch verlaufen durch den Auslauf keine zwei separaten Schläuche, sodass ein Herausziehen des Auslaufs aus dem Gehäuse und das Montieren der Sanitärarmatur erleichtert werden.

Zudem ist es vorteilhaft, wenn der erste Schlauch und der zweite Schlauch zumindest teilweise konzentrisch zueinander angeordnet sind. Das zweite Fluid wird dabei in einem Ringraum zwischen dem ersten Schlauch und dem zweiten Schlauch zu der Austrittsöffnung des Auslaufs geleitet. Der Ringraum ist im Wesentlichen ringförmig ausgestaltet und erstreckt sich zumindest teilweise entlang des ersten Schlauchs und/oder zweiten Schlauchs. Erfindungsgemäß ist der erste Schlauch von einem ersten Nippel und der zweite Schlauch von einem zweiten Nippel zu der Austrittsöffnung des Auslaufs geführt. Bei dem ersten Nippel und/oder dem zweiten Nippel handelt es sich um ein zumindest teilweise rohrförmiges Bauteil, auf das der erste Schlauch und/oder der zweite Schlauch fluidleitend aufsteckbar sind. Dabei wird der erste Nippel zumindest teilweise in den zweiten Nippel derart eingestreckt, dass der zweite Nippel den auf dem ersten Nippel aufgesteckten ersten Schlauch gegen ein Lösen von dem ersten Nippel sichert. Hierzu presst der zweite Nippel den ersten Schlauch insbesondere mit radial nach innen weisenden Kräften auf den ersten Nippel. Der zweite Nippel dient somit als Sicherung des erstens Schlauchs gegen Lösen.

Ebenfalls vorteilhaft ist es, wenn der erste Nippel und der zweite Nippel zumindest teilweise in eine Anbindung einsteckbar sind. Bei der Anbindung kann es sich um ein zumindest teilweise zylinderförmiges Bauteil handeln, das fest mit dem Gehäuse verbindbar ist. Die Anbindung kann aber auch geführt und/oder frei hängend und/oder mit Abstand zur Sanitärarmatur vorgesehen sein. Bevorzugt ist die Anbindung im Raum beweglich angeordnet, so dass diese einer räumlichen Verlagerung des ersten Schlauchs und zweiten Schlauchs folgen kann, z. B. bei einer Drehung und/oder Verschiebung gegenüber der Sanitärarmatur. Die Anbindung besteht bevorzugt zumindest teilweise aus Kunststoff. Weiterhin ist das erste Fluid und/oder das zweite Fluid insbesondere über die Anbindung dem ersten Schlauch und/oder dem zweiten Schlauch zuführbar.

Zudem ist es vorteilhaft, wenn der erste Nippel mit einer ersten Dichtung und der zweite Nippel mit einer zweiten Dichtung gegenüber der Anbindung abdichtbar sind. Bei der ersten Dichtung und/oder der zweiten Dichtung handelt es sich insbesondere um einen O-Ring.

Darüber hinaus ist es vorteilhaft, wenn die Anbindung eine erste Bohrung für den ersten Nippel und eine zweite Bohrung für den zweiten Nippel aufweist. Der erste Nippel ist insbesondere in die erste Bohrung und/oder der zweite Nippel in die zweite Bohrung einsteckbar. Hierzu weist die erste Bohrung insbesondere einen ersten Innendurchmesser auf, der im Wesentlichen einem ersten Außendurchmesser des ersten Nippels entspricht. Entsprechend weist die zweite Bohrung insbesondere einen zweiten Innendurchmesser auf, der im Wesentlichen einem zweiten Außendurchmesser des zweiten Nippels entspricht. Der erste Nippel ist insbesondere zumindest teilweise in die erste Bohrung und/oder der zweite Nippel insbesondere zumindest teilweise in die zweite Bohrung der Anbindung fluiddicht einsteckbar.

Weiterhin ist es vorteilhaft, wenn in die erste Bohrung zumindest ein erster Fluidkanal und in die zweite Bohrung zumindest ein zweiter Fluidkanal mündet. Über den ersten Fluidkanal ist das erste Fluid dem ersten Schlauch und/oder über den zweiten Fluidkanal das zweite Fluid dem zweiten Schlauch zuführbar.

Ebenfalls vorteilhaft ist es, wenn der zweite Schlauch mit einer Hülse an dem zweiten Nippel befestigbar ist. Bei der Hülse handelt es sich insbesondere um eine Crimphülse, die zur Befestigung plastisch verformbar ist.

Gemäß einer weiteren Ausgestaltung der Sanitärarmatur liegen der erste Schlauch und der zweite Schlauch abschnittsweise in einer Schlaufe. Eine "Schlaufe" bildet insbesondere einen flexibel beweglichen Teil des ersten Schlauches und des zweiten Schlauches. Diese Schlaufe befindet sich insbesondere in einem Abschnitt des ersten Schlauches und des zweiten Schlauches zwischen dem Auslauf und dem ersten Nippel bzw. dem zweiten Nippel. Ein im Auslauf an der Austrittsöffnung sitzender Strahlregler kann aus dem Auslauf herausgezogen werden, wobei hierdurch der erste Schlauch und der zweite Schlauch aus dem Auslauf heraus gezogen werden. Hierdurch verkleinert und/oder verlagert sich die Schlaufe. Der Strahlregler ist darüber hinaus beweglich und kann dazu genutzt werden den Strahl der Sanitärarmatur frei zu bewegen. Die Anbindung bzw. insbesondere der erste Nippel und der zweite Nippel sind dann vorzugsweise unterhalb der Sanitärarmatur angeordnet, beispielsweise lose hängend unter einem Waschtisch. Der erste Schlauch und der zweite Schlauch liegen dann unterhalb des Gehäuses der Sanitärarmatur in einer Schlaufe.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigt schematisch:
- Fig. 1:: eine Sanitärarmatur in einer perspektivischen Darstellung;
- Fig. 2:: eine Schnittdarstellung durch eine Anbindung der Sanitärarmatur
- Fig. 3:: einen Montageprozess eines ersten Nippels und zweiten Nippels an der Anbindung; und
- Fig. 4.: eine Variante der Sanitärarmatur gemäß Fig. 1.

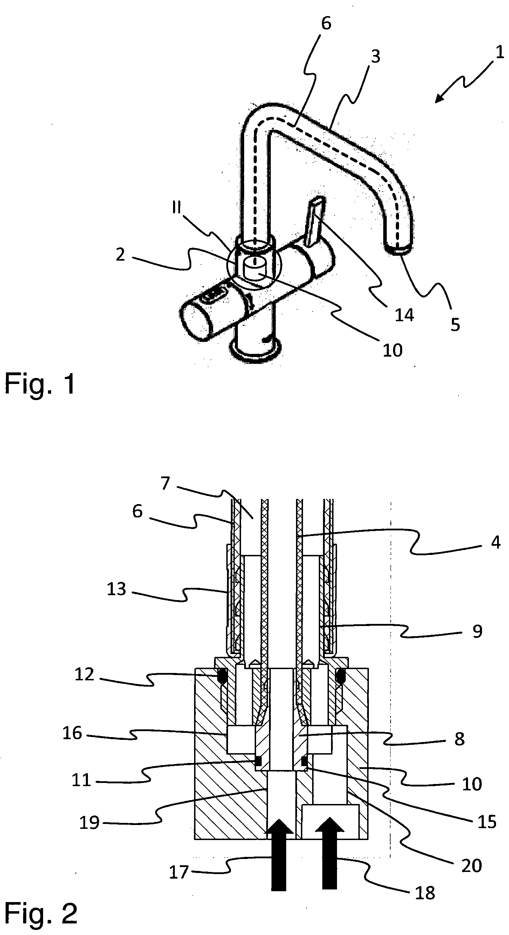

Die Fig. 1 zeigt eine Sanitärarmatur 1 mit einem Gehäuse 2 und einem Auslauf 3 in einer perspektivischen Darstellung. Der Auslauf 3 ist drehbar an dem Gehäuse 2 angeordnet und aus dem Gehäuse 2 herausziehbar. Das Gehäuse 2 weist zudem einen Hebel 14 auf, mittels dem ein hier nicht gezeigtes Ventil betätigbar ist. In dem Gehäuse 2 ist ferner eine Anbindung 10 befestigt, von der aus ein hier schematisch dargestellter zweiter Schlauch 6 durch den Auslauf 3 zu einer Austrittsöffnung 5 des Auslaufs 3 führt.

Die Fig. 2 zeigt den in der Fig. 1 mit II markierten Bereich der Sanitärarmatur 1 in einer Schnittdarstellung. Zu erkennen ist hier insbesondere ein erster Schlauch 4, der konzentrisch in dem zweiten Schlauch 6 angeordnet ist. Somit wird durch den ersten Schlauch 4 und den zweiten Schlauch 6 ein Ringraum 7 ausgebildet. Der erste Schlauch 4 ist auf einen ersten Nippel 8 und der zweite Schlauch 6 auf einen zweiten Nippel 9 aufgesteckt. Der zweite Schlauch 6 ist mittels einer Hülse 13, bei der es sich hier um eine Crimphülse handelt, gegen Lösen von dem zweiten Nippel 9 gesichert. Die Anbindung 10 weist eine erste Bohrung 15, in die der erste Nippel 8 einsteckbar ist, und eine zweite Bohrung 16, in die der zweite Nippel 9 einsteckbar ist, auf. Der erste Nippel 8 ist in der ersten Bohrung 15 mittels einer ersten Dichtung 11 und der zweite Nippel 9 in der zweiten Bohrung 16 mit einer zweiten Dichtung 12 gegenüber der Anbindung 10 abdichtbar. Bei der ersten Dichtung 11 und der zweiten Dichtung 12 handelt es sich hier jeweils um O-Ringe. In die erste Bohrung 15 mündet ein erster Fluidkanal 19 für ein erstes Fluid 17 und in die zweite Bohrung 16 ein zweiter Fluidkanal 20 für ein zweites Fluid 18. Somit ist das erste Fluid 17 durch den ersten Schlauch 4 und das zweite Fluid 18 durch den Ringraum 7 zwischen dem ersten Schlauch 4 und dem zweiten Schlauch 6 der in der Fig. 1 gezeigten Austrittsöffnung 5 des Auslaufs 3 getrennt voneinander zuführbar.

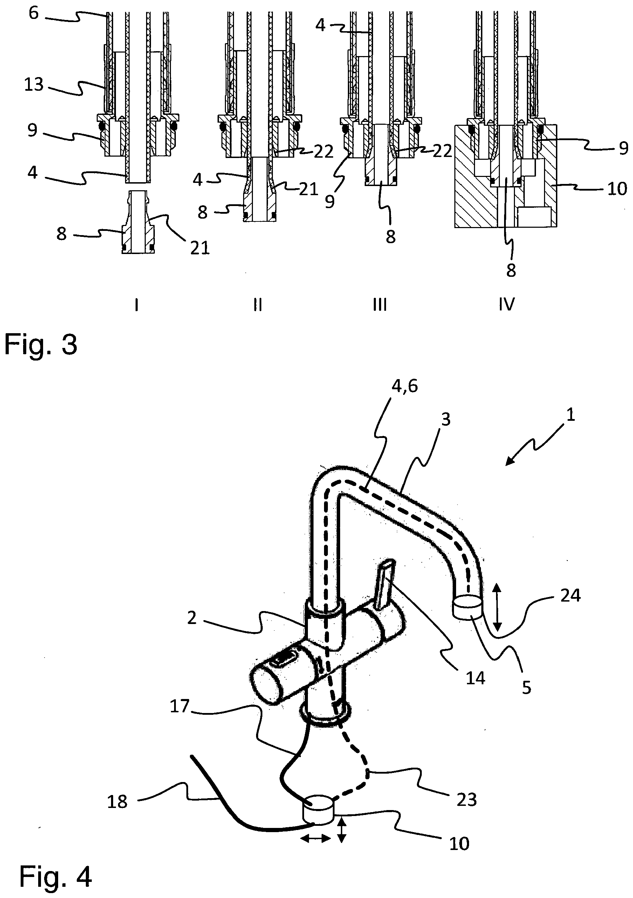

Die Fig. 3 zeigt einen Montageprozess des ersten Nippels 8 und des zweiten Nippels 9 an der Anbindung 10. In Schritt I ist der zweite Schlauch 6 bereits mit der Hülse 13 an dem zweiten Nippel 9 befestigt. Der erste Schlauch 4 erstreckt sich durch den zweiten Schlauch 6 und den zweiten Nippel 9 und ist noch nicht auf den ersten Nippel 8 aufgesteckt. Das Aufstecken des ersten Schlauchs 4 auf den ersten Nippel 8 erfolgt in Schritt II. Der erste Schlauch 4 wird dabei an seinem Ende durch einen Außenkonus 21 des ersten Nippels 8 aufgespreizt. In Schritt III wird der erste Nippel 8 in den zweiten Nippel 9 eingesteckt. Hierdurch wird der erste Schlauch 4 an dem ersten Nippel 8 durch den zweiten Nippel 9 gegen Lösen gesichert. Hierzu weist der zweite Nippel 9 einen zu dem Außenkonus 21 entsprechenden Innenkonus 22 auf. Der erste Schlauch 4 und der zweite Schlauch 6 sind somit in Schritt IV durch nur drei Bauteile, nämlich dem ersten Nippel 8, dem zweiten Nippel 9 und der Hülse 13, an die Anbindung 10 befestigbar.

Fig. 4 zeigt eine ("pull-out") Variante der Sanitärarmatur 1 gemäß Fig. 1, bei der der erste Schlauch 4 und der zweite Schlauch 6 gemeinsam unterhalb der Sanitärarmatur 1 bzw. unterhalb des Gehäuses 2 in einer Schlaufe 23 liegen. So wird das erste Fluid 17 (z. B. das von der Sanitärarmatur erzeugte Mischwasser) mit einer ersten Leitung und das zweite Fluid 18 (z. B. von einer getrennten Aufbereitungseinheit) mit einer zweiten Leitung hin zur Anbindung 10 geführt. Die Anbindung 10 hängt (z.B. ohne eine separate Führung und/oder Halterung hin zum Gehäuse 2 bzw. zum nicht gezeigten Waschtisch) am Ende der konzentrischen Doppel-Schlauchanordnung (4, 6). Ein Strahlregler 24 an der Austrittsöffnung 5 des Auslaufes 3 der Sanitärarmatur 1 ist beweglich und kann aus dem Auslauf 3 heraus gezogen werden. Dabei kann die Doppel-Schlauchanordnung zusammen mit der Anbindung 10 mitbewegt werden, so dass sich die Form bzw. Ausprägung der Schlaufe 23 ändert.

Die vorliegende Erfindung zeichnet sich insbesondere dadurch aus, dass mit dieser zwei Fluide getrennt voneinander ohne eine Mehrzahl von separaten Schläuchen zu einer Austrittsöffnung eines Auslaufs leitbar sind.

### Bezugszeichenliste

- 1: Sanitärarmatur
- 2: Gehäuse
- 3: Auslauf
- 4: erster Schlauch
- 5: Austrittsöffnung
- 6: zweiter Schlauch
- 7: Ringraum
- 8: erster Nippel
- 9: zweiter Nippel
- 10: Anbindung
- 11: erste Dichtung
- 12: zweite Dichtung
- 13: Hülse
- 14: Hebel
- 15: erste Bohrung
- 16: zweite Bohrung
- 17: erstes Fluid
- 18: zweites Fluid
- 19: erster Fluidkanal
- 20: zweiter Fluidkanal
- 21: Außenkonus
- 22: Innenkonus
- 23: Schlaufe
- 24: Strahlregler

## Patentansprüche

1. Sanitärarmatur (1), aufweisend ein Gehäuse (2) mit einem Auslauf (3), wobei ein erstes Fluid (17) über einen ersten Schlauch (4) zu einer Austrittsöffnung (5) des Auslaufs (3) und ein zweites Fluid (18) über einen zweiten Schlauch (6) zu der Austrittsöffnung (5) des Auslaufs (3) leitbar sind und wobei der erste Schlauch (4) zumindest teilweise in dem zweiten Schlauch (6) angeordnet ist und das zweite Fluid (18) in einem Ringraum (7) zwischen dem ersten Schlauch (4) und dem zweiten Schlauch (6) zu der Austrittsöffnung (5) des Auslaufs (3) leitbar ist, wobei der erste Schlauch (4) von einem ersten Nippel (8) und der zweite Schlauch (6) von einem zweiten Nippel (9) zu der Austrittsöffnung (5) des Auslaufs (3) führen
**dadurch gekennzeichnet, dass**
der erste Nippel (8) zumindest teilweise derart in den zweiten Nippel (9) einsteckbar ist, dass der zweite Nippel (9) den auf dem ersten Nippel (8) aufgesteckten ersten Schlauch (4) gegen ein Lösen von dem ersten Nippel sichert, wobei der zweite Nippel (9) den ersten Schlauch (4) insbesondere mit radial nach innen weisenden Kräften auf den ersten Nippel (8) presst.

2. Sanitärarmatur (1) nach Patentanspruch 1, wobei der erste Schlauch (4) und der zweite Schlauch (6) zumindest teilweise konzentrisch zueinander angeordnet sind.

3. Sanitärarmatur (1) nach Patentanspruch 1 oder 2, wobei der erste Nippel (8) und der zweite Nippel (9) zumindest teilweise in eine Anbindung (10) einsteckbar sind.

4. Sanitärarmatur (1) nach Patentanspruch 3, wobei der erste Nippel (8) mit einer ersten Dichtung (11) und der zweite Nippel (9) mit einer zweiten Dichtung (12) gegenüber der Anbindung (10) abdichtbar sind.

5. Sanitärarmatur (1) nach Patentanspruch 3 oder 4, wobei die Anbindung (10) eine erste Bohrung (15) für den ersten Nippel (8) und eine zweite Bohrung (16) für den zweiten Nippel (9) aufweist.

6. Sanitärarmatur (1) nach Patentanspruch 5, wobei in die erste Bohrung (15) zumindest ein erster Fluidkanal (19) und in die zweite Bohrung (16) zumindest ein zweiter Fluidkanal (20) mündet.

7. Sanitärarmatur (1) nach einem der vorhergehenden Patentansprüche, wobei der zweite Schlauch (6) mit einer Hülse (13) an dem zweiten Nippel (9) befestigbar ist.

8. Sanitärarmatur (1) nach einem der vorhergehenden Patentansprüche, wobei der erste Schlauch (4) und der zweite Schlauch (6) abschnittsweise in einer Schlaufe (23) liegen.

## Claims

1. Sanitary fitting (1), having a housing (2) with a spout (3), wherein a first fluid (17) is conductible via a first hose (4) to an outlet opening (5) of the spout (3) and a second fluid (18) is conductible via a second hose (6) to the outlet opening (5) of the spout (3) and wherein the first hose (4) is arranged at least partly in the second hose (6) and the second fluid (18) is conductible in an annular space (7) between the first hose (4) and the second hose (6) to the outlet opening (5) of the spout (3), the first hose (4) leading from a first nipple (8) and the second hose (6) leading from a second nipple (9) to the outlet opening (5) of the spout (3),
**characterised in that**
the first nipple (8) is insertable at least partly into the second nipple (9) in such a way that the second nipple (9) secures the first hose (4), which is mounted on the first nipple (8), against detachment from the first nipple, the second nipple (9) pressing the first hose (4) onto the first nipple (8) especially by means of radially inwardly directed forces.

2. Sanitary fitting (1) according to patent claim 1, wherein the first hose (4) and the second hose (6) are arranged at least partly concentrically with respect to one another.

3. Sanitary fitting (1) according to patent claim 1 or 2, wherein the first nipple (8) and the second nipple (9) are insertable at least partly into a connector (10).

4. Sanitary fitting (1) according to patent claim 3, wherein the first nipple (8) is sealable by means of a first seal (11) and the second nipple (9) is sealable by means of a second seal (12) with respect to the connector (10).

5. Sanitary fitting (1) according to patent claim 3 or 4, wherein the connector (10) has a first bore (15) for the first nipple (8) and a second bore (16) for the second nipple (9).

6. Sanitary fitting (1) according to patent claim 5, wherein at least one first fluid channel (19) opens into the first bore (15) and at least one second fluid channel (20) opens into the second bore (16).

7. Sanitary fitting (1) according to any one of the preceding patent claims, wherein the second hose (6) is attachable to the second nipple (9) by means of a sleeve (13).

8. Sanitary fitting (1) according to any one of the preceding patent claims, wherein the first hose (4) and the second hose (6) are in some sections arranged in a loop (23).

## Revendications

1. Robinetterie sanitaire (1) comprenant un boîtier (2) ayant une sortie (3), un premier fluide (17) pouvant être transféré par un premier tuyau (4) vers un orifice d'évacuation (5) de la sortie (3) et un second fluide (18) pouvant être transféré par un second tuyau (6) vers l'orifice d'évacuation (5) de la sortie (3), le premier tuyau (4) étant monté au moins en partie dans le second tuyau (6) et le second fluide (18) pouvant être transféré dans une chambre annulaire (7) située entre le premier tuyau (4) et le second tuyau (6) vers l'orifice d'évacuation (5) de la sortie (3), et, le premier tuyau (4) conduisant à un premier raccord (8) à l'orifice d'évacuation (5) de la sortie (3), et le second tuyau (6) conduisant d'un second raccord (9) à l'orifice d'évacuation (5) de la sortie (3),
**caractérisée en ce que**
le premier raccord (8) peut être enfiché au moins partiellement dans le second raccord (9) de sorte que le second raccord (9) empêche que le premier tuyau (4) enfiché sur le premier raccord (8) soit séparé du premier raccord, le second raccord (9) serrant le premier raccord (4) en particulier par des forces s'exerçant radialement vers l'intérieur sur le premier raccord (8).

2. Robinetterie sanitaire (1) conforme à la revendication 1,
dans laquelle le premier tuyau (4) et le second tuyau (6) sont au moins partiellement concentriques.

3. Robinetterie sanitaire (1) conforme à la revendication 1 ou 2,
dans laquelle le premier raccord (8) et le second raccord (9) peuvent être enfichés au moins partiellement dans un organe de connexion (10).

4. Robinetterie sanitaire (1) conforme à la revendication 3,
dans laquelle l'étanchéité du premier raccord (8) vis-à-vis de l'organe de connexion (10) peut être assurée par un premier joint d'étanchéité (11) tandis que l'étanchéité du second raccord (9) vis-à-vis de l'organe de connexion (10) peut être assurée par un second joint d'étanchéité (12).

5. Robinetterie sanitaire (1) conforme à la revendication 3 ou 4,
dans laquelle l'organe de connexion (10) comporte un premier perçage (15) pour le premier raccord (8) et un second perçage (16) pour le second raccord (9).

6. Robinetterie sanitaire (1) conforme à la revendication 5,
dans laquelle au moins un premier canal de fluide (19) débouche dans le premier perçage (15) et au moins un second canal de fluide (20) débouche dans le second perçage (16).

7. Robinetterie sanitaire (1) conforme à l'une des revendications précédentes,
dans laquelle le second tuyau (6) peut être fixé sur le second raccord (9) avec un manchon (13).

8. Robinetterie sanitaire (1) conforme à l'une des revendications précédentes,
dans laquelle le premier tuyau (4) et le second tuyau (6) sont par segments situés dans une boucle (23).
